# EUROPEAN PATENT APPLICATION

(11) **EP 4 848 037 A1**
(43) Date of publication of application: **02.12.2026**
(21) Application number: 25757541.5
(22) Date of filing: 02.01.2025
(51) Int. Cl.: G06F 1/3234, G06F 1/3206

(54) **APPARATUS AND METHOD FOR CONTROLLING PROCESSOR CLUSTER, AND DEVICE**

(30) Priority: 19.02.2024 CN 202410185827
(71) Applicant: Huawei Technologies Co., Ltd., Shenzhen, Guangdong 518129 (CN)
(72) Inventor: WANG, Ronghua, Shenzhen, Guangdong 518129 (CN); ZHOU, Yongbin, Shenzhen, Guangdong 518129 (CN)
(74) Representative: Körber, Martin Hans
(86) International application number: PCT/CN2025/070178
(87) International publication number: WO 2025/175943

(57) **Abstract**

This application relates to the field of electronic technologies, and provides a processor cluster control apparatus and method, and a device, to improve energy efficiency of a processor cluster while ensuring that overall performance of the processor cluster remains unchanged. The apparatus includes: a plurality of processors located in a same voltage domain and/or clock domain, and a detector and a controller that are coupled to a first processor in the plurality of processors. The detector is configured to detect a performance parameter of the first processor. The controller is configured to: when a load of the first processor is less than a load of a second processor, control the first processor to switch from a normal working mode to a performance degradation mode, where the second processor is a processor with a largest load in the plurality of processors. A first performance parameter of the first processor detected by the detector in the normal working mode is greater than a second performance parameter of the first processor detected by the detector in the performance degradation mode.

## Description

This application claims priority to Chinese Patent Application No. 202410185827.8, filed with the China National Intellectual Property Administration on February 19, 2024, and entitled "PROCESSOR CLUSTER CONTROL APPARATUS AND METHOD, AND DEVICE", which is incorporated herein by reference in its entirety.

### TECHNICAL FIELD

This application relates to the field of electronic technologies, and in particular, to a processor cluster control apparatus and method, and a device.

### BACKGROUND

A plurality of processors are usually integrated in a system on chip (system on chip, SoC), to provide the SoC with greater computational power. In addition, in consideration of complexity of a power distribution network design, the plurality of processors are combined together to form a processor cluster, sharing a same voltage domain and/or clock domain. In other words, the plurality of processors in the processor cluster share a same working voltage and/or working frequency. In this case, none of the plurality of processors can independently perform dynamic voltage and frequency scaling (dynamic voltage and frequency scaling, DVFS) control.

When the plurality of processors in the processor cluster are used to process services, load imbalance may occur among the plurality of processors due to various reasons. The working voltage and/or working frequency are usually determined according to a computational power requirement of a processor with the largest load. In this case, a problem of excessive computational power exists when a processor with a lighter load operates at the working voltage and/or working frequency, thereby reducing system energy efficiency.

### SUMMARY

This application provides a processor cluster control apparatus and method, and a device, to improve energy efficiency of a processor cluster while ensuring that overall performance of the processor cluster remains unchanged. To achieve the foregoing objectives, the following technical solutions are used in embodiments of this application.

According to a first aspect, a processor cluster control apparatus is provided. The apparatus includes: a plurality of processors located in a same voltage domain and/or clock domain (that is, the plurality of processors use a same working voltage and/or working frequency), and a controller coupled to a first processor in the plurality of processors. The controller is configured to: when a load of the first processor is less than a load of any one of the plurality of processors, control the first processor to switch from a normal working mode to a performance degradation mode (that is, reduce a performance parameter of the first processor), and the working voltage and/or working frequency provided in the voltage domain and/or clock domain are determined according to a computational power requirement of a processor with the largest load. A first performance parameter of the first processor in the normal working mode is greater than a second performance parameter of the first processor in the performance degradation mode.

In the foregoing technical solution, for the first processor with the smaller load in the processor cluster, the controller may be configured to control the first processor to switch from the normal working mode to the performance degradation mode, to deteriorate performance of the first processor, so that different processors in the processor cluster complete load processing within same or close time. In this way, energy efficiency of the processor cluster can be improved while ensuring that overall performance of the processor cluster remains unchanged.

In a possible implementation of the first aspect, the apparatus further includes a detector coupled to the first processor. The detector is configured to detect a performance parameter of the first processor. For example, the performance parameter includes a quantity of instructions executed per unit time. In the foregoing possible implementation, the detector detects the performance parameter of the first processor, so that the controller can accurately control performance of the first processor based on the performance parameter.

In a possible implementation of the first aspect, the apparatus further includes a configuration interface coupled to the first processor. The configuration interface is configured to receive configuration information, where the configuration information indicates whether to enable the performance degradation mode, and the configuration information may be configured by software for the first processor. The controller is further configured to: when the configuration information indicates to enable the performance degradation mode, control the first processor to switch from the normal working mode to the performance degradation mode. In the foregoing possible implementation, when the configuration information of the first processor indicates to enable the performance degradation mode of the first processor, the controller controls the first processor to switch from the normal working mode to the performance degradation mode, so that the first processor can be flexibly controlled, and the performance degradation mode of the first processor is not mistakenly triggered.

In a possible implementation of the first aspect, the controller is further configured to: when the first processor is in the performance degradation mode, control, according to a preset control policy and/or based on a preset degradation strength, the first processor to perform a performance degradation operation. In the foregoing possible implementation, the controller controls, according to the preset control policy and/or based on the preset degradation strength, the first processor to perform the performance degradation operation, so that the performance degradation operation of the first processor can be flexibly controlled, thereby improving effectiveness and accuracy of controlling the performance degradation operation.

In a possible implementation of the first aspect, the configuration information further indicates a target degradation strength. The controller is further configured to: determine a target performance parameter based on the target degradation strength and the first performance parameter; and adjust the preset control policy and/or the preset degradation strength when an absolute value of a difference between the target performance parameter and the second performance parameter is greater than a preset threshold. In the foregoing possible implementation, the controller may implement closed-loop control on the performance parameter of the first processor, thereby achieving a balance between energy efficiency gain and performance loss, and finally enabling different processors in the processor cluster to complete load processing within same or nearly same time. In this way, energy efficiency of the processor cluster can be improved while ensuring that overall performance of the processor cluster remains unchanged.

In a possible implementation of the first aspect, the performance degradation operation corresponding to the preset control policy and/or the preset degradation strength includes at least one of the following: intermittently disabling a clock, reducing a branch instruction prediction strength, reducing a prefetch strength of a hardware prefetcher, stopping access to at least one level of a branch target buffer, stopping use of a specified branch prediction algorithm, stopping a delay-related speculative optimization function, stopping a wake-up-related speculative optimization function, and disabling a preset physical resource. In the foregoing possible implementation, diversity and selection flexibility of the performance degradation operation corresponding to the preset control policy and/or the preset degradation strength are provided. In this way, when performance degradation is performed on the first processor, an appropriate performance degradation operation may be selected based on an actual situation, to accurately control the performance parameter of the first processor.

According to a second aspect, a processor cluster control method is provided, applied to a processor cluster control apparatus. The apparatus includes a plurality of processors located in a same voltage domain and/or clock domain, and a controller coupled to a first processor in the plurality of processors. The method includes: When a load of the first processor is less than a load of any one of the plurality of processors, the controller controls the first processor to switch from a normal working mode to a performance degradation mode, where a first performance parameter of the first processor in the normal working mode is greater than a second performance parameter of the first processor in the performance degradation mode.

In a possible implementation of the second aspect, the apparatus further includes a detector coupled to the first processor. The method further includes: The detector detects a performance parameter of the first processor. For example, the performance parameter includes a quantity of instructions executed per unit time.

In a possible implementation of the second aspect, the apparatus further includes a configuration interface coupled to the first processor. The method further includes: The configuration interface receives configuration information, where the configuration information indicates whether to enable the performance degradation mode. That the controller controls the first processor to switch from the normal working mode to the performance degradation mode includes: When the configuration information indicates to enable the performance degradation mode, the controller controls the first processor to switch from the normal working mode to the performance degradation mode.

In a possible implementation of the second aspect, the method further includes: When the first processor is in the performance degradation mode, the controller controls, according to a preset control policy and/or based on a preset degradation strength, the first processor to perform a performance degradation operation.

In a possible implementation of the second aspect, the configuration information further indicates a target degradation strength. The method further includes: The controller determines a target performance parameter based on the target degradation strength and the first performance parameter; and adjusts the preset control policy and/or the preset degradation strength when an absolute value of a difference between the target performance parameter and the second performance parameter is greater than a preset threshold.

In a possible implementation of the second aspect, the performance degradation operation corresponding to the preset control policy and/or the preset degradation strength includes at least one of the following: intermittently disabling a clock, reducing a branch instruction prediction strength, reducing a prefetch strength of a hardware prefetcher, stopping access to at least one level of a branch target buffer, stopping use of a specified branch prediction algorithm, stopping a delay-related speculative optimization function, stopping a wake-up-related speculative optimization function, and disabling a preset physical resource.

In a possible implementation of the second aspect, the performance parameter includes a quantity of instructions executed per unit time.

Another aspect of this application provides an electronic device. The electronic device includes a memory and a processor cluster control apparatus. The control apparatus includes a plurality of processors located in a same voltage domain and/or clock domain, and a detector and a controller that are coupled to each of the plurality of processors. The memory is configured to store computer instructions. The control apparatus is configured to execute the computer instructions, so that the electronic device implements the processor cluster control method in any one of the second aspect or the possible implementations of the second aspect. Optionally, the processor cluster control apparatus is the processor cluster control apparatus provided in any one of the first aspect or the possible implementations of the first aspect.

Still another aspect of this application provides a computer-readable storage medium. The computer-readable storage medium stores a computer program or instructions. When the computer program or the instructions are run, the processor cluster control method in any one of the second aspect or the possible implementations of the second aspect is implemented.

Still another aspect of this application provides a computer program product. The computer program product includes a computer program (which may also be referred to as code or instructions). When the computer program is run, a computer is enabled to perform the processor cluster control method provided in any one of the second aspect or the possible implementations of the second aspect.

It may be understood that, for beneficial effects that can be achieved by any processor cluster control method, electronic device, computer-readable storage medium, and computer program product provided above, refer to beneficial effects in the processor cluster control apparatus provided above.

### BRIEF DESCRIPTION OF DRAWINGS

FIG. 1 is a diagram of a structure of a SoC according to an embodiment of this application;
FIG. 2 is a diagram of performing load balancing on a plurality of processors in a processor cluster according to an embodiment of this application;
FIG. 3A and FIG. 3B are diagrams of performance of processors in a processor cluster in different control scenarios according to an embodiment of this application;
FIG. 4 is a diagram of a structure of a processor cluster control apparatus according to an embodiment of this application;
FIG. 5 is a diagram of a structure of another processor cluster control apparatus according to an embodiment of this application;
FIG. 6 is a diagram of controlling a processor to switch between different states according to an embodiment of this application;
FIG. 7A and FIG. 7B are a schematic flowchart of a processor cluster control method according to an embodiment of this application; and
FIG. 8 is a diagram of a structure of an electronic device according to an embodiment of this application.

### DESCRIPTION OF EMBODIMENTS

The making and use of embodiments are discussed in detail below. It should be appreciated, however, that many applicable inventive concepts provided in this application may be implemented in a plurality of specific environments. The specific embodiments discussed are merely illustrative of specific ways to implement and use this application and this technology, and do not limit the scope of this application.

Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. The term "at least one of the following items (pieces)" or an expression similar to the term indicates any combination of the items, including a single item (piece) or any combination of a plurality of items (pieces). For example, at least one of a, b, or c may indicate: a, b, c, a and b, a and c, b and c, or a, b, and c, where a, b, and c may be singular or plural.

In embodiments of this application, words such as "first" and "second" are used to distinguish between objects with similar names or functions or effects. A person skilled in the art may understand that the words such as "first" and "second" do not limit a quantity and an execution sequence. The term "coupling" is used for representing an electrical connection, including a direct connection through a wire or a connection end or an indirect connection through another device. Therefore, "coupling" should be considered as a generalized electronic communication connection.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

Before embodiments of this application are described below, an application scenario in embodiments of this application is first described.

A plurality of processors are usually integrated in a system on chip (system on chip, SoC), to provide the SoC with greater computational power. In addition, in consideration of complexity of a power distribution network design, the plurality of processors in the SoC are combined together to form a processor cluster, sharing a same voltage domain and/or clock domain. In other words, a plurality of processors in a same processor cluster share a same working voltage and/or working frequency. In this case, none of the plurality of processors can independently perform dynamic voltage and frequency scaling (dynamic voltage and frequency scaling, DVFS) control.

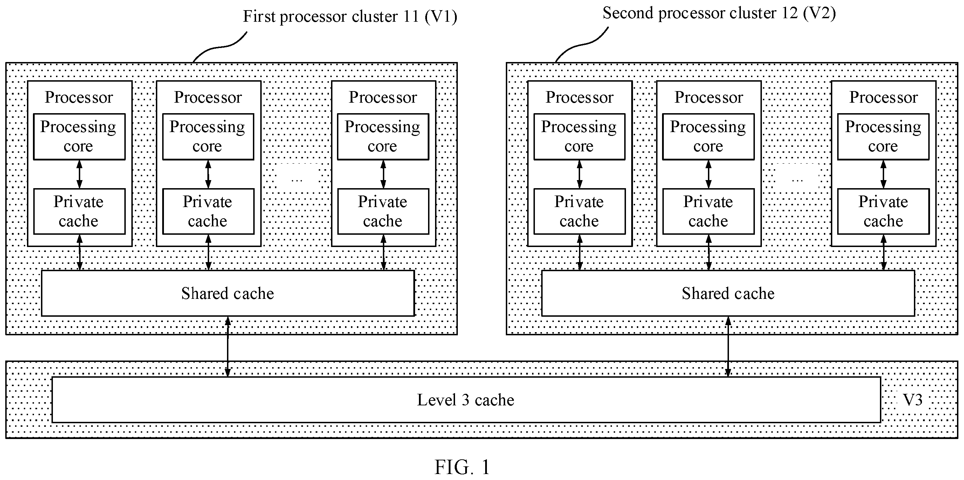

For example, FIG. 1 is a diagram of a structure of the SoC. The SoC includes at least one processor cluster, each of the at least one processor cluster includes a plurality of processors and a shared cache, and a plurality of processors and a shared cache that are in a same processor cluster share a same voltage domain. Optionally, each processor may include a processing core (or referred to as a kernel, also referred to as a processor core) and a private cache. In FIG. 1, an example in which the at least one processor cluster includes a first processor cluster 11 and a second processor cluster 12, the first processor cluster 11 is in a first voltage domain V1, and the second processor cluster 12 is in a second voltage domain V2 is used for description. Optionally, the SoC may further include a level 3 (level 3, L3) cache that can be accessed by the at least one processor cluster, and the level 3 cache may be located in a third voltage domain V3.

When the plurality of processors in the same processor cluster are used to process services, load imbalance may occur among the plurality of processors due to various reasons. The working voltage and/or working frequency are usually determined according to a computational power requirement of a processor with a largest load (or referred to as a heaviest load). In this case, a problem of excessive computational power exists when a processor with a lighter load (or referred to as with a smaller load) operates at the working voltage and/or working frequency, thereby reducing system energy efficiency.

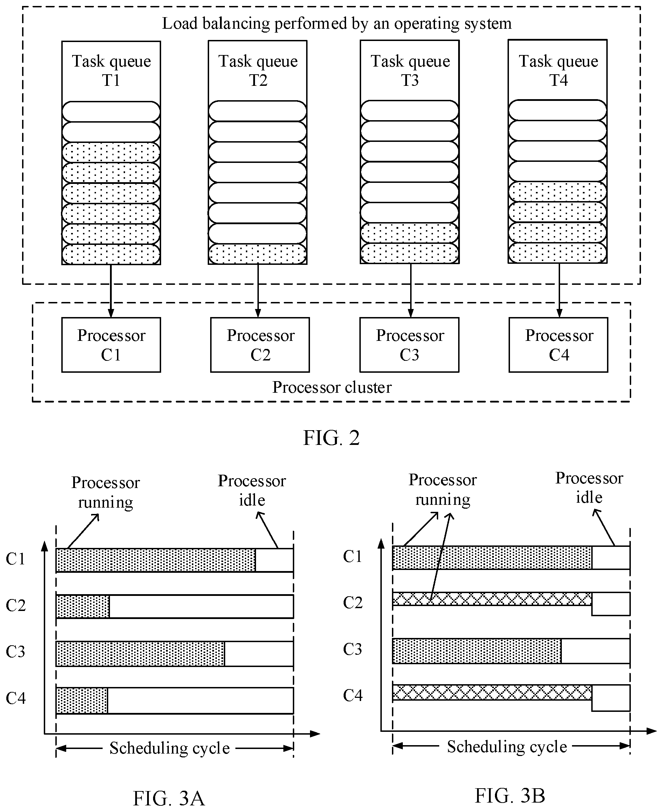

In an embodiment, an operating system of the SoC usually uses a scheduling algorithm to balance loads of the processors in the same processor cluster as much as possible, to ensure that loads of most processors are moderate. However, when a quantity of processors in the same processor cluster is large, for example, an architecture evolves from a dual-core to a quad-core, as a load scenario changes, it is difficult for the operating system to implement ideal load balancing. FIG. 2 is a diagram of performing load balancing on different processors in a same processor cluster. For example, as shown in FIG. 2, one processor cluster includes four processors. When performing load balancing, an operating system may place a load (or referred to as a task) distributed to each processor into a task queue corresponding to the processor. In a load balancing process, a heavy-load thread, a light-load thread, or the like often occurs. Therefore, loads in task queues corresponding to the four processors are unbalanced. In the figure, for example, the four processors are represented as C1 to C4, task queues corresponding to the four processors are represented as T1 to T4, and loads of the four processors are sequentially arranged as C1, C4, C3, and C2 in descending order. In this case, the operating system determines a working voltage and a working frequency of the processor cluster based on the load of the processor C1, to meet a computational power requirement of the processor C1. However, the processors C2 to C4 with lighter loads have a problem of excessive computational power.

In view of this, an embodiment of this application provides a processor cluster control apparatus. The control apparatus may be configured to degrade performance of a processor with a smaller load in a processor cluster, to deteriorate performance of the processor with the smaller load, so that different processors in the processor cluster complete load processing within same or close time. In this way, energy efficiency of the processor cluster can be improved while ensuring that overall performance of the processor cluster remains unchanged. For example, FIG. 3A and FIG. 3B respectively show diagrams of performance of a processor with a lighter load in a same processor cluster before and after performance degradation is performed. In the figure, the processor cluster includes four processors, which are represented as C1 to C4. A load of the processor C1 is the largest, and loads of the processors C1 to C4 are smaller. In in FIG. 3B, performance degradation is performed on the processors C2 and C4 as an example for description. A horizontal coordinate represents a scheduling cycle. Two rectangles corresponding to a same processor in a vertical coordinate respectively represent that the processor is in a running state and that the processor is in an idle state. Performance of the processor in the running state may be represented by a width of a corresponding rectangle, and duration in which the processor is in the running state may be represented by a length of a corresponding rectangle.

The foregoing processor cluster control apparatus may be used in an electronic device, or used in an SoC of an electronic device, a chipset including a plurality of chips, or a module including the SoC or the chipset. The electronic device may be used as a server, or may be used as a terminal device. Optionally, the electronic device includes but is not limited to a mobile phone, a tablet computer, a notebook computer, a desktop computer, a palmtop computer, an ultra-mobile personal computer (ultra-mobile personal computer, umPC), a mobile internet device (mobile internet device, MID), a netbook, a video camera, a camera, a wearable device (such as a smart watch or a smart band), a vehicle-mounted device (such as a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (such as a refrigerator, a television, an air conditioner, and an electric meter), a smart robot, a workshop device, a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a flight device (for example, a smart robot, a hot air balloon, an uncrewed aerial vehicle, or an airplane), or the like.

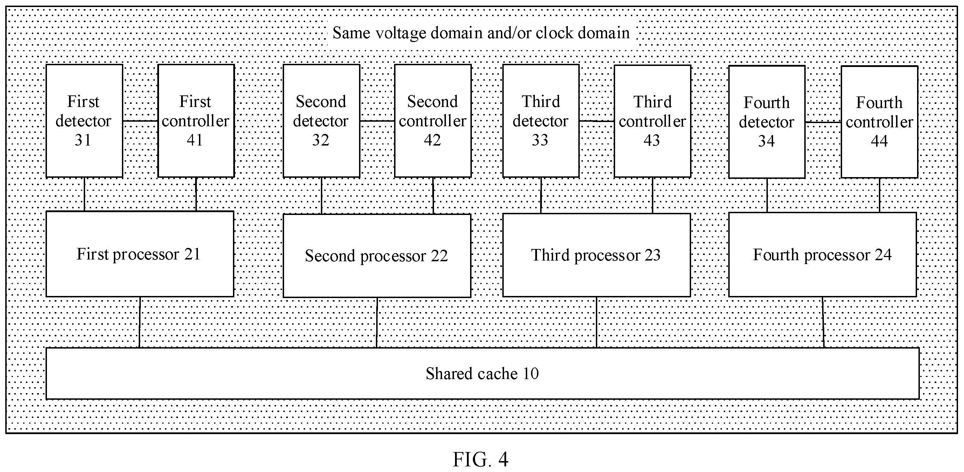

FIG. 4 is a diagram of a structure of a processor cluster control apparatus according to an embodiment of this application. The apparatus includes a plurality of processors located in a same voltage domain and/or clock domain, and a controller coupled to any one of the plurality of processors. Optionally, the apparatus further includes a detector coupled to the any processor. For ease of description, the following uses an example in which the plurality of processors include a first processor 21, and the first processor 21 is coupled to a first detector 31 and a first controller 41 for description.

The first detector 31 is configured to detect a performance parameter of the first processor 21. The performance parameter of the first processor 21 includes one or more parameters that can represent performance of the first processor 21. In an example, the performance parameter of the first processor 21 includes a quantity of instructions executed per unit time. For example, the quantity of instructions executed per unit time is an instruction per clock (instruction per clock, IPC), that is, a quantity of instructions executed per clock cycle. Optionally, the first detector 31 may be configured to periodically or aperiodically detect the performance parameter of the first processor 21. Further, the first detector 31 may be further configured to send the detected performance parameter to the first controller 41.

The first controller 41 is configured to: When a load of the first processor 21 is less than a load of any one of the plurality of processors, control the first processor 21 to switch from a normal working mode to a performance degradation mode. For example, the load of the first processor 21 is less than a load of the second processor 22, and the second processor 22 is a processor with a largest load in the plurality of processors. A first performance parameter of the first processor 21 detected by the first detector 31 in the normal working mode is greater than a second performance parameter of the first processor 21 detected by the first detector 31 in the performance degradation mode.

That the first processor 21 is in the normal working mode (or referred to as that the first processor 21 is in the normal working mode) may specifically mean that performance degradation is not performed when the first processor 21 processes the load, that is, the first processor 21 runs normally in the current technology. That the first processor 21 is in the performance degradation mode (or referred to as that the first processor 21 is in the performance degradation mode) may specifically mean that performance degradation is performed when the first processor 21 processes the load. In this case, running of the first processor 21 is different from the foregoing normal running, and the second performance parameter detected by the first detector 31 when the first processor 21 is in the performance degradation mode is less than the first performance parameter detected when the first processor 21 is in the normal working mode.

In addition, the load of the first processor 21 is less than the load of the second processor 22, and the second processor 22 is a processor with a largest load in the plurality of processors. In an example, a difference between the load of the second processor 22 and the load of the first processor 21 may be greater than a preset threshold. The preset threshold may be preset, and a specific value may be fixed, or may dynamically change. This is not specifically limited in embodiments of this application.

In a possible embodiment, when a load of the first processor 21 is less than a load of the second processor 22, and a difference between the load of the second processor 22 and the load of the first processor 21 is greater than a preset threshold, the first controller 41 may be configured to control the first processor 21 to switch from a normal working mode to a performance degradation mode, to reduce a performance parameter of the first processor 21, so that the first processor 21 and the second processor 22 can complete load processing within same or close time. In this way, energy efficiency of the processor cluster can be improved while ensuring that overall performance of the processor cluster remains unchanged. Optionally, when the load of the first processor 21 is less than the load of the second processor 22, and the difference between the load of the second processor 22 and the load of the first processor 21 is not greater than the preset threshold, it indicates that the first processor 21 and the second processor 22 may complete load processing within close time. In this case, the first processor 21 may process the load in the normal working mode.

Optionally, the plurality of processors further include a third processor 23, a fourth processor 24, and the like. In other words, the plurality of processors may include more processors. In this case, a processor with a largest load in the plurality of processors may be used as the second processor 22, and any processor other than the processor with the largest load in the plurality of processors may be used as the first processor 21. In a possible embodiment, each of the plurality of processors is coupled to one detector and one controller, and a detector and a controller that correspond to a same processor may also be coupled to each other.

For example, as shown in FIG. 4, the plurality of processors include the first processor 21, the second processor 22, the third processor 23, and the fourth processor 24. The first processor 21 is coupled to the first detector 31 and the first controller 41, the second processor 22 is coupled to a second detector 32 and a second controller 42, the third processor 23 is coupled to a third detector 33 and a third controller 43, and the fourth processor 24 is coupled to a fourth detector 34 and a fourth controller 44. Optionally, the control apparatus may further include a shared cache 10, and all the first processor 21, the second processor 22, the third processor 23, and the fourth processor 24 can access the shared cache 10.

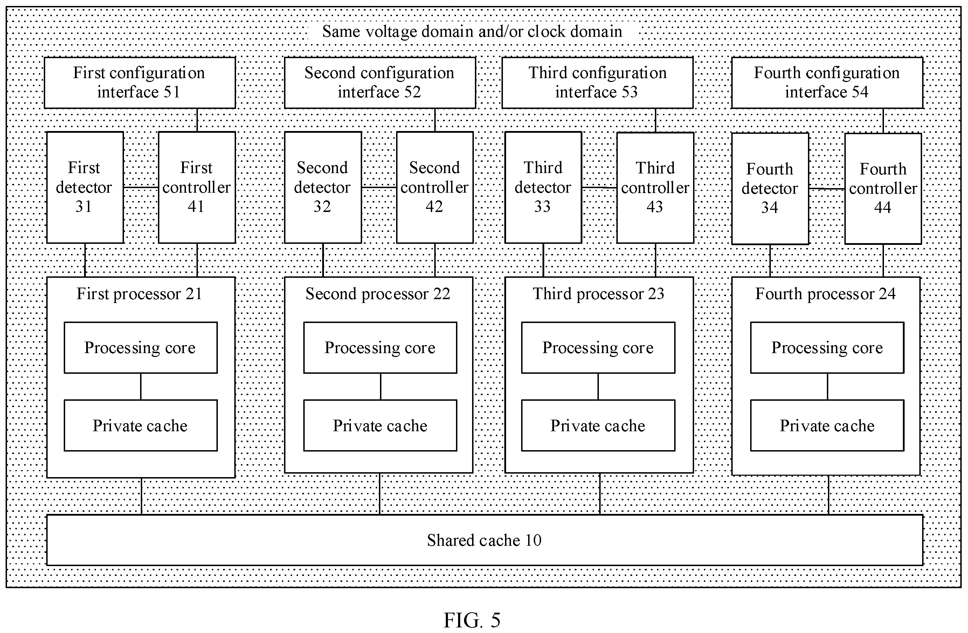

Further, as shown in FIG. 5, each of the plurality of processors may be coupled to a configuration interface. For example, the first processor 21 is coupled to a first configuration interface 51, the second processor 22 is coupled to a second configuration interface 52, the third processor 23 is coupled to a third configuration interface 53, and the fourth processor 24 is coupled to a fourth configuration interface 54. Each of the plurality of processors may be directly or indirectly coupled to a corresponding configuration interface, and the configuration interface may be further coupled to a controller corresponding to the processor. Optionally, as shown in FIG. 5, each of the plurality of processors may include a processing core and a private cache.

For any one of the plurality of processors, a configuration interface correspondingly coupled to the processor may be configured to receive configuration information of the processor, and a controller correspondingly coupled to the processor may be configured to control the processor based on the configuration information. The following uses an example in which the first processor 21 is correspondingly coupled to the first configuration interface 51 and the first controller 41 for description.

The first configuration interface 51 is configured to receive configuration information of the first processor 21, where the configuration information indicates whether to enable a performance degradation mode of the first processor 21. The configuration information may be configured by software (for example, an operating system) running on the processor cluster for the first processor 21 through the first configuration interface 51, and the performance degradation mode may be disabled by default.

The first controller 41 is further configured to: when the configuration information indicates to enable the performance degradation mode, control the first processor 21 to switch from the normal working mode to the performance degradation mode. For example, when the configuration information indicates to enable the performance degradation mode, the first controller 41 may send a control signal to the first processor 21. When the first processor 21 receives the control signal, the first processor 21 switches from the normal working mode to the performance degradation mode.

Further, when the first processor 21 is in the performance degradation mode, performance degradation may be performed on the first processor 21, to deteriorate performance of the first processor 21. The following describes in detail a process of performing performance degradation on the first processor 21.

In a possible embodiment, the first controller 41 is further configured to: when the first processor 21 is in the performance degradation mode, control, according to a preset control policy and/or based on a preset degradation strength, the first processor 21 to perform a performance degradation operation.

The preset control policy and the preset degradation strength may be preconfigured, and the performance degradation operation corresponding to the preset control policy and the performance degradation operation corresponding to the preset degradation strength may also be preconfigured. Optionally, the preset control policy may include at least one control policy, and each control policy in the at least one control policy may correspond to one or more performance degradation operations. Similarly, the preset degradation strength may also include at least one degradation strength, and each of the at least one degradation strength may include one or more performance degradation operations.

Optionally, the performance degradation operation corresponding to the preset control policy and/or the preset degradation strength includes at least one of the following: intermittently disabling a clock (of the processor), reducing a branch instruction prediction strength, reducing a prefetch strength of a hardware prefetcher, stopping access to at least one level of a branch target buffer (for example, a level-1 branch target buffer or a level-2 branch target buffer), stopping use of a specified branch prediction algorithm, stopping a delay-related speculative optimization function, stopping a wake-up-related speculative optimization function, and disabling a preset physical resource (for example, disabling a physical register file, disabling an issue queue, and disabling a sequential commit queue).

A degradation strength corresponding to each performance degradation operation may be related to execution time, an execution strength, and/or an execution quantity corresponding to the performance degradation operation. For example, intermittently disabling the clock is used as an example. Longer duration of disabling the clock indicates a higher corresponding degradation strength, and shorter duration of disabling the clock indicates a lower corresponding degradation strength. For another example, reducing the branch instruction prediction strength is used as an example. A larger reduction in strength indicates a higher corresponding degradation strength, and a smaller reduced strength value indicates a lower corresponding degradation strength. For another example, disabling the physical register file is used as an example. A larger quantity of disabled physical register files indicates a higher corresponding degradation strength, and a smaller quantity of disabled physical register files indicates a lower corresponding degradation strength.

In addition, the execution time, the execution strength, and/or the execution quantity corresponding to each performance degradation operation may be fixed, or may be dynamically adjusted according to a requirement in actual application. This is not specifically limited in embodiments of this application.

In a possible example, the preset control policy includes a plurality of control policies, and performance degradation operations corresponding to any two of the plurality of control policies may be completely different, or partially different, or may be the same but correspond to different execution time, execution strengths, and/or execution quantities. For example, it is assumed that performance degradation operations corresponding to the plurality of control policies are at least partially the same, and a performance degradation operation corresponding to each of the plurality of control policies may be shown in Table 1.

**Table 1**

| Preset control policy | Corresponding performance degradation operation |
|---|---|
| Control policy 1 | Intermittently disable a clock, and reduce a branch instruction prediction strength |
| Control policy 2 | Intermittently disable a clock, and reduce a prefetch strength of a hardware prefetcher |
| Control policy 3 | Stop access to at least one level of a branch target buffer |
| Control policy 4 | Stop use of a specified branch prediction algorithm, and stop a delay-related speculative optimization function |
| Control policy 5 | Stop a wake-up-related speculative optimization function |
| Control policy 6 | Reduce a branch instruction prediction strength, and disable a preset physical resource |
| ... | ... |

In another possible example, the preset degradation strength includes a plurality of degradation strengths, and performance degradation operations corresponding to any two of the plurality of degradation strengths may be completely different, or partially different, or may be the same but correspond to different execution time, execution strengths, and/or execution quantities. For example, it is assumed that performance degradation operations corresponding to the plurality of degradation strengths are at least partially the same, and a performance degradation operation corresponding to each of the plurality of degradation strengths may be shown in Table 2.

**Table 2**

| Preset degradation strength | Corresponding performance degradation operation |
|---|---|
| Degradation strength 1 | Intermittently disable a clock |
| Degradation strength 2 | Reduce a branch instruction prediction strength, and reduce a prefetch strength of a hardware prefetcher |
| Degradation strength 3 | Stop access to at least one level of a branch target buffer |
| Degradation strength 4 | Stop use of a specified branch prediction algorithm, and disable a preset physical resource |
| Degradation strength 5 | Stop a delay-related speculative optimization function, and stop a wake-up-related speculative optimization function |
| ... | ... |

In addition, the following Table 3 shows energy efficiency gain corresponding to each performance degradation operation listed above. The energy efficiency gain may include: reducing power consumption of a clock tree, reducing power consumption of an instruction loss caused by a speculative failure part, reducing power consumption caused by a hardware speculative operation, reducing power consumption of a branch target buffer, reducing power consumption of a resource that needs to be accessed by a complex branch prediction algorithm, reducing additional power consumption caused by a speculative error, and reducing power consumption of a preset physical resource.

**Table 3**

| Performance degradation operation | Energy efficiency gain |
|---|---|
| Intermittently disable a clock | Reduce power consumption of a clock tree |
| Reduce a branch instruction prediction strength | Reduce power consumption of an instruction loss caused by a speculative failure part |
| Reduce a prefetch strength of a hardware prefetcher | Reduce power consumption caused by a hardware speculative operation |
| Stop access to at least one level of a branch target buffer | Reduce power consumption of a branch target buffer |
| Stop use of a specified branch prediction algorithm | Reduce power consumption of a resource that needs to be accessed by a complex branch prediction algorithm |
| Stop a delay-related speculative optimization function | Reduce additional power consumption caused by a speculative error |
| Stop a wake-up-related speculative optimization function | Reduce additional power consumption caused by a speculative error |
| Disable a preset physical resource | Reduce power consumption of the preset physical resource |

It may be understood that the performance degradation operation listed above is merely an example. In actual application, another performance degradation operation that can reduce the performance parameter of the processor may be alternatively used. This is not specifically limited in embodiments of this application.

In another possible embodiment, when the first processor 21 is in the performance degradation mode, the first processor 21 may alternatively perform the performance degradation operation according to the preset control policy and/or based on the preset degradation strength. For specific descriptions of the preset control policy, the preset degradation strength, and the performance degradation operation, refer to the foregoing descriptions. Details are not described herein again in embodiments of this application.

Further, the configuration information further indicates a target degradation strength. The first controller 41 is further configured to: determine a target performance parameter based on the target degradation strength and the first performance parameter; and adjust the preset control policy and/or the preset degradation strength when an absolute value of a difference between the target performance parameter and the second performance parameter is greater than a preset threshold.

In a possible example, the target degradation strength may be a degraded strength, and a product of the target degradation strength and the first performance parameter may be the target performance parameter. For example, if the target degradation strength is 80% and the first performance parameter is A, the target performance parameter is equal to 0.8×A. In another possible example, the target degradation strength may be a strength that needs to be reduced, and a product of the first performance parameter and the first difference may be the target performance parameter, where the first difference is a difference obtained by subtracting the target degradation strength from 1. For example, if the target degradation strength is 20% and the first performance parameter is A, the target performance parameter is equal to (1-0.2)×A.

Optionally, the configuration information may further indicate the target performance parameter. In this case, the first controller 41 may directly obtain the target performance parameter from the configuration information, and does not need to determine the target performance parameter through calculation.

After determining the target performance parameter, the first controller 41 may adjust the preset control policy and/or the preset degradation strength based on a value relationship between the absolute value of the difference between the target performance parameter and the second performance parameter and the preset threshold (or referred to as a value relationship between the target performance parameter and the second performance parameter). The preset threshold may be preset. A specific value of the preset threshold is not limited in embodiments of this application.

In a possible example, when the target performance parameter is greater than the second performance parameter, and the difference between the target performance parameter and the second performance parameter is greater than the preset threshold, the current performance parameter of the first processor 21 looks still large. In this case, the first controller 41 may use a control policy for faster degradation or increase a degradation strength, so that the first processor 21 performs a more radical performance degradation operation, to further reduce the performance parameter of the first processor 21, until the difference between the target performance parameter and the second performance parameter detected by the first detector 31 is less than or equal to the preset threshold, or the second performance parameter detected by the first detector 31 is close to the target performance parameter.

In a possible example, when the target performance parameter is less than the second performance parameter, and the difference between the second performance parameter and the target performance parameter is greater than the preset threshold, the current performance parameter of the first processor 21 looks excessively small. In this case, the first controller 41 may use a control policy for slower degradation or decrease a degradation strength, so that the first processor 21 performs a more conservative performance degradation operation, to gradually increase the performance parameter of the first processor 21, until the difference between the target performance parameter and the second performance parameter detected by the first detector 31 is less than or equal to the preset threshold.

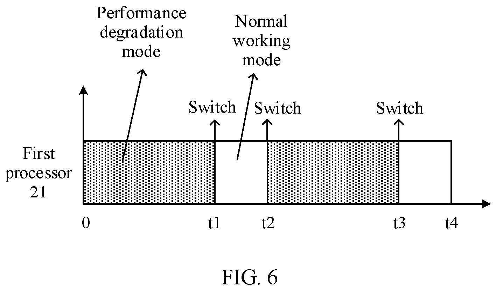

Optionally, when the load of the first processor 21 is less than the load of the second processor 22, the first controller 41 may be further configured to: intermittently (for example, periodically or aperiodically) control the first processor 21 to switch between the normal working mode and the performance degradation mode, and compare a first performance parameter and a second performance parameter that are of the first processor 21 and that are detected by the first detector 31 in a same time period (for example, a moment 0 to a moment t2 or a moment t1 to a moment t3 in FIG. 6 below), to monitor whether the performance parameter of the first processor 21 is within a configured range. For example, FIG. 6 is a diagram in which the first controller 41 intermittently controls the first processor 21 to switch between the normal working mode and the performance degradation mode. In the figure, an example in which the first processor 21 is in the performance degradation mode from the moment 0 to the moment t1 and from the moment t2 to the moment t3, and is in the normal working mode from the moment t1 to the moment t2 and from the moment t3 to a moment t4, and the first controller 41 separately controls, at the moment t1, the moment t2, and the moment t3, the first processor 21 to switch between the normal working mode and the performance degradation mode is used for description.

For ease of understanding, the following describes the solution provided in this embodiment of this application by using an example in which the performance parameter of the first processor 21 is an IPC and the control apparatus controls the first processor 21 by using the following flowchart shown in FIG. 6.

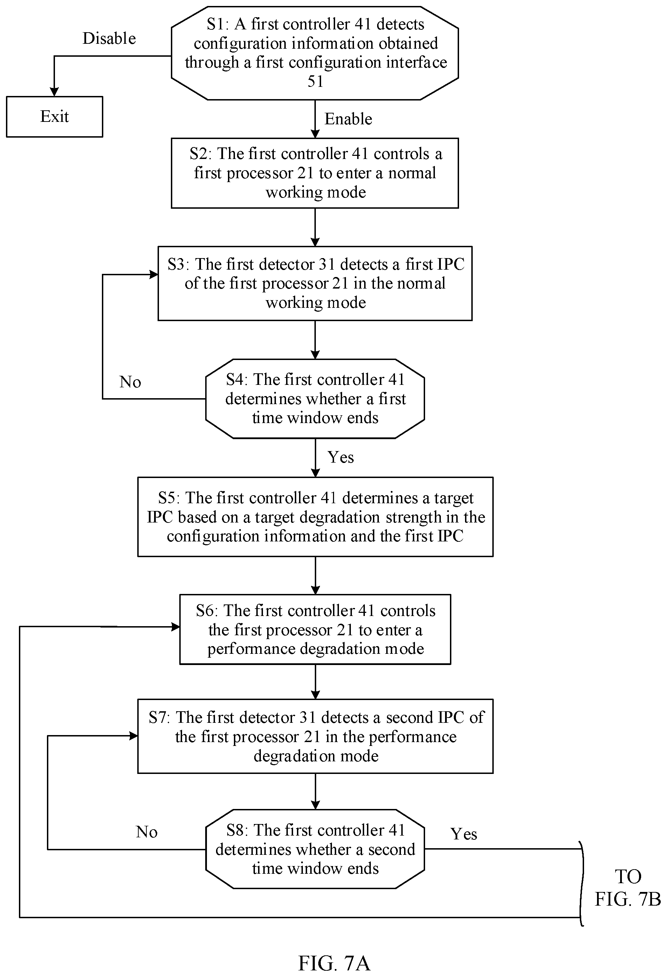

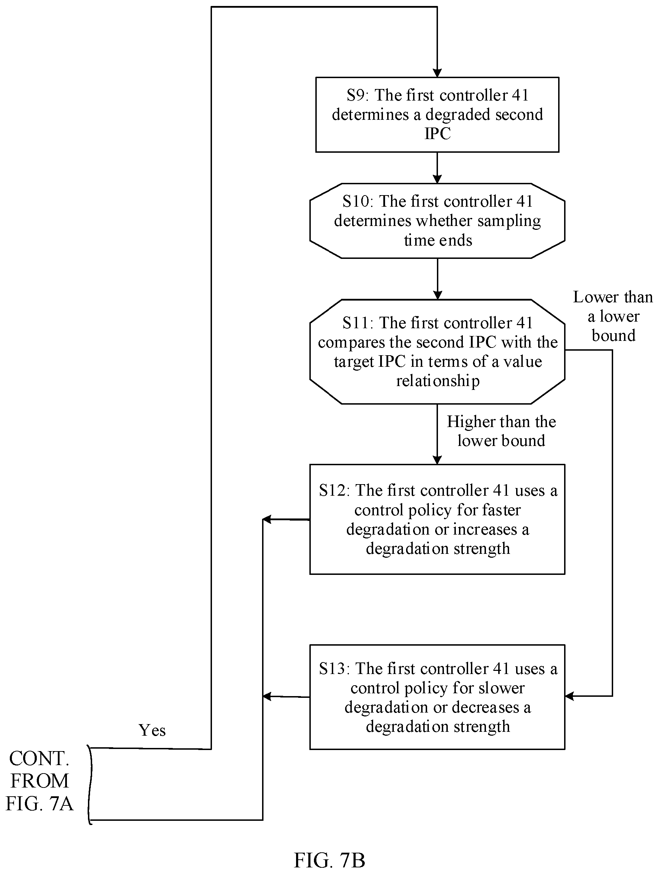

For example, as shown in FIG. 7A and FIG. 7B, the method includes: S1: The first controller 41 detects the configuration information obtained through the first configuration interface 51, and if the configuration information indicates to disable the performance degradation mode, the process exits (namely, ends); or if the configuration information indicates to enable the performance degradation mode, S2 is performed; S2: The first controller 41 controls the first processor 21 to enter the normal working mode; S3: The first detector 31 detects a first IPC of the first processor 21 in the normal working mode; S4: The first controller 41 determines whether a first time window ends, where the first time window is a time window for detecting the first IPC, and if the first time window does not end, S3 is returned; or if the first time window ends, S5 is performed; S5: The first controller 41 determines a target IPC based on the target degradation strength in the configuration information and the first IPC, where the target IPC may also be referred to as the IPC lower bound; S6: The first controller 41 controls the first processor 21 to enter the performance degradation mode; S7: The first detector 31 detects a second IPC of the first processor 21 in the performance degradation mode; S8: The first controller 41 determines whether a second time window ends, where the second time window is a time window for detecting the second IPC, and if the second time window does not end, S7 is returned; or if the second time window ends, S9 is performed; S9: The first controller 41 determines a degraded second IPC based on the second IPC detected by the first detector 31 in the second time window; S10: The first controller 41 determines whether sampling time ends, and if the sampling time ends, S2 is returned; or if the sampling time does not end, S11 is performed; S11: The first controller 41 compares the second IPC with the target IPC in terms of a value relationship, and if the second IPC is greater than the target IPC (that is, higher than the IPC lower bound), S12 is performed; or if the second IPC is less than the target IPC (that is, lower than the IPC lower bound), S13 is performed; S12: The first controller 41 uses the control policy for faster degradation or increases the degradation strength; and S13: The first controller 41 uses the control policy for slower degradation or decreases the degradation strength.

In this embodiment of this application, the first controller 41 may intermittently control the first processor 21 to switch between the normal working mode and the performance degradation mode, and adjust, based on the first performance parameter and the second performance parameter of the first processor 21 that are detected by the first detector 31 in the same time period, the control policy or the degradation strength corresponding to the performance degradation operation of the first processor 21, thereby implementing closed-loop control on the performance parameter of the first processor 21, and achieving a balance between energy efficiency gain and performance loss. Finally, different processors in the processor cluster complete load processing within the same or nearly the same time. In this way, energy efficiency of the processor cluster can be improved while ensuring that overall performance of the processor cluster remains unchanged.

In view of this, an embodiment of this application further provides a processor cluster control method. The method may be applied to a processor cluster control apparatus. For descriptions of the control apparatus, refer to the foregoing descriptions. The method includes: When a load of the first processor is less than a load of any one of the plurality of processors, the first controller controls the first processor to switch from a normal working mode to a performance degradation mode, where a first performance parameter of the first processor in the normal working mode is greater than a second performance parameter of the first processor in the performance degradation mode. Optionally, the method further includes: The first detector detects a performance parameter of the first processor.

The performance parameter of the first processor may include a quantity of instructions executed per unit time. For example, the quantity of instructions executed per unit time is an instruction per clock IPC, namely, a quantity of instructions executed per clock cycle.

Optionally, the method further includes: A first configuration interface receives configuration information, where the configuration information indicates whether to enable the performance degradation mode. Correspondingly, that the first controller controls the first processor to switch from the normal working mode to the performance degradation mode includes: When the configuration information indicates to enable the performance degradation mode, the controller controls the first processor to switch from the normal working mode to the performance degradation mode.

In a possible embodiment, the method further includes: When the first processor is in the performance degradation mode, the first controller controls, according to a preset control policy and/or based on a preset degradation strength, the first processor to perform a performance degradation operation.

Further, the configuration information further indicates a target degradation strength. The method further includes: The first controller determines a target performance parameter based on the target degradation strength and the first performance parameter; and adjusts the preset control policy and/or the preset degradation strength when an absolute value of a difference between the target performance parameter and the second performance parameter is greater than a preset threshold.

Optionally, the performance degradation operation corresponding to the preset control policy and/or the preset degradation strength includes at least one of the following: intermittently disabling a clock, reducing a branch instruction prediction strength, reducing a prefetch strength of a hardware prefetcher, stopping access to at least one level of a branch target buffer, stopping use of a specified branch prediction algorithm, stopping a delay-related speculative optimization function, stopping a wake-up-related speculative optimization function, and disabling a preset physical resource.

In this embodiment of this application, the control apparatus degrades performance of a processor with a smaller load in a processor cluster, to deteriorate performance of the processor with the smaller load, so that different processors in the processor cluster complete load processing within same or close time. In this way, energy efficiency of the processor cluster can be improved while ensuring that overall performance of the processor cluster remains unchanged.

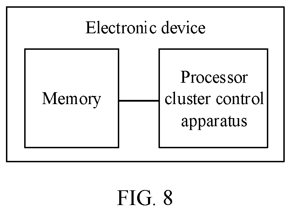

Another aspect of this application further provides an electronic device. As shown in FIG. 8, the electronic device includes a memory and a processor cluster control apparatus. The control apparatus includes a plurality of processors located in a same voltage domain and/or clock domain, and a detector and a controller that are coupled to each of the plurality of processors. The memory is configured to store computer instructions. The control apparatus is configured to execute the computer instructions, so that the electronic device implements any processor cluster control method provided above. For specific descriptions of the control apparatus, refer to the foregoing embodiment.

It may be understood that all related content of the steps in the foregoing apparatus embodiments may be cited in embodiments of the control method and embodiments of the electronic device. Details are not described herein again in embodiments of this application.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed.

The units described as separate parts may or may not be physically separate, and parts displayed as units may be one or more physical units, may be located in one place, or may be distributed on different places. A part or all of the units may be selected based on actual requirements to achieve the objectives of the solutions of embodiments.

If the integrated unit is implemented in a form of a software functional unit and is sold or used as an independent product, the integrated unit may be stored in a readable storage medium. The readable storage medium may include any medium that can store program code, for example, a USB flash drive, a removable hard disk, a read-only memory, a random access memory, a magnetic disk, or an optical disc. Based on such an understanding, the technical solutions in embodiments of this application essentially, or the part contributing to the current technology, or all or a part of the technical solutions may be embodied in a form of a software product.

In another embodiment of this application, a readable storage medium is further provided. The readable storage medium stores computer-executable instructions. When a device (which may be a single-chip microcomputer, a chip, or the like) or a processor performs the steps in the foregoing method embodiment.

In another embodiment of this application, a computer program product is further provided. The computer program product includes computer instructions, and the computer instructions are stored in a readable storage medium. At least one processor of a device may read the computer instructions from the readable storage medium, and the at least one processor executes the computer instructions to enable the device to perform the steps in the foregoing method embodiment.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A processor cluster control apparatus, wherein the apparatus comprises a plurality of processors located in a same voltage domain and/or clock domain, and a controller coupled to a first processor in the plurality of processors; and
the controller is configured to: when a load of the first processor is less than a load of any one of the plurality of processors, control the first processor to switch from a normal working mode to a performance degradation mode, wherein
a first performance parameter of the first processor in the normal working mode is greater than a second performance parameter of the first processor in the performance degradation mode.

2. The apparatus according to claim 1, wherein the apparatus further comprises a detector coupled to the first processor; and
the detector is configured to detect a performance parameter of the first processor.

3. The apparatus according to claim 1 or 2, wherein the apparatus further comprises a configuration interface coupled to the first processor;
the configuration interface is configured to receive configuration information, wherein the configuration information indicates whether to enable the performance degradation mode; and
the controller is further configured to: when the configuration information indicates to enable the performance degradation mode, control the first processor to switch from the normal working mode to the performance degradation mode.

4. The apparatus according to any one of claims 1 to 3, wherein
the controller is further configured to: when the first processor is in the performance degradation mode, control, according to a preset control policy and/or based on a preset degradation strength, the first processor to perform a performance degradation operation.

5. The apparatus according to claim 4, wherein the configuration information further indicates a target degradation strength; and
the controller is further configured to: determine a target performance parameter based on the target degradation strength and the first performance parameter; and adjust the preset control policy and/or the preset degradation strength when an absolute value of a difference between the target performance parameter and the second performance parameter is greater than a preset threshold.

6. The apparatus according to claim 4 or 5, wherein the performance degradation operation corresponding to the preset control policy and/or the preset degradation strength comprises at least one of the following: intermittently disabling a clock, reducing a branch instruction prediction strength, reducing a prefetch strength of a hardware prefetcher, stopping access to at least one level of a branch target buffer, stopping use of a specified branch prediction algorithm, stopping a delay-related speculative optimization function, stopping a wake-up-related speculative optimization function, and disabling a preset physical resource.

7. The apparatus according to any one of claims 1 to 6, wherein the performance parameter comprises a quantity of instructions executed per unit time.

8. A processor cluster control method, applied to a processor cluster control apparatus, wherein the apparatus comprises a plurality of processors located in a same voltage domain and/or clock domain, and a controller coupled to a first processor in the plurality of processors; and the method comprises:
when a load of the first processor is less than a load of any one of the plurality of processors, controlling, by the controller, the first processor to switch from a normal working mode to a performance degradation mode, wherein
a first performance parameter of the first processor in the normal working mode is greater than a second performance parameter of the first processor in the performance degradation mode.

9. The method according to claim 8, wherein the apparatus further comprises a detector coupled to the first processor; and the method further comprises:
the detector is configured to detect a performance parameter of the first processor.

10. The method according to claim 8 or 9, wherein the apparatus further comprises a configuration interface coupled to the first processor; and the method further comprises:
receiving, by the configuration interface, configuration information, wherein the configuration information indicates whether to enable the performance degradation mode; and
controlling, by the controller, the first processor to switch from the normal working mode to the performance degradation mode comprises: when the configuration information indicates to enable the performance degradation mode, controlling, by the controller, the first processor to switch from the normal working mode to the performance degradation mode.

11. The method according to any one of claims 8 to 10, wherein the method further comprises:
when the first processor is in the performance degradation mode, controlling, by the controller according to a preset control policy and/or based on a preset degradation strength, the first processor to perform a performance degradation operation.

12. The method according to claim 11, wherein the configuration information further indicates a target degradation strength; and the method further comprises:
determining, by the controller, a target performance parameter based on the target degradation strength and the first performance parameter; and adjusting the preset control policy and/or the preset degradation strength when an absolute value of a difference between the target performance parameter and the second performance parameter is greater than a preset threshold.

13. The method according to claim 11 or 12, wherein the performance degradation operation corresponding to the preset control policy and/or the preset degradation strength comprises at least one of the following: intermittently disabling a clock, reducing a branch instruction prediction strength, reducing a prefetch strength of a hardware prefetcher, stopping access to at least one level of a branch target buffer, stopping use of a specified branch prediction algorithm, stopping a delay-related speculative optimization function, stopping a wake-up-related speculative optimization function, and disabling a preset physical resource.

14. The method according to any one of claims 8 to 13, wherein the performance parameter comprises a quantity of instructions executed per unit time.

15. An electronic device, wherein the electronic device comprises a memory and the processor cluster control apparatus according to any one of claims 1 to 7, and the memory is configured to store instructions and/or data required by the apparatus.

16. A computer-readable storage medium, wherein the computer-readable storage medium stores computer instructions, and when the computer instructions are run on a device, the device is enabled to perform the processor cluster control method according to any one of claims 8 to 14.
